# EUROPÄISCHE PATENTSCHRIFT

(11) **EP 2 563 620 B1**
(45) Veröffentlichungstag und Bekanntmachung des Hinweises auf die Patenterteilung: **13.04.2016**
(21) Anmeldenummer: 11718294.9
(22) Anmeldetag: 28.04.2011
(51) Int. Cl.: B29C 44/12, B29C 44/14, B29C 43/18, B60R 13/02

(54) **FAHRZEUGINNENVERKLEIDUNGSTEIL SOWIE VERFAHREN ZUR HERSTELLUNG EINES FAHRZEUGINNENVERKLEIDUNGSTEILS**
VEHICLE INTERIOR TRIM PART AND METHOD FOR PRODUCING A VEHICLE INTERIOR TRIM PART
ÉLÉMENT D'HABILLAGE INTÉRIEUR DE VÉHICULE, ET PROCÉDÉ DE PRODUCTION D'UN ÉLÉMENT D'HABILLAGE INTÉRIEUR DE VÉHICULE

(30) Priorität: 29.04.2010 DE 102010019153
(43) Veröffentlichungstag der Anmeldung: 06.03.2013
(73) Patentinhaber: Faurecia Innenraum Systeme GmbH, 76767 Hagenbach (DE)
(72) Erfinder: TEICHMANN, Jürgen, 31224 Peine (DE); RAUSSEN, Heinrich, 31224 Peine (DE)
(74) Vertreter: Pfenning, Meinig & Partner mbB
(86) Internationale Anmeldenummer: PCT/EP2011/002131
(87) Internationale Veröffentlichungsnummer: WO 2011/134658

(56) Entgegenhaltungen:
- EP-A2- 0 949 124
- DE-A1- 3 016 199
- DE-A1- 3 844 636
- DE-A1- 19 704 383
- US-A1- 2001 030 070
- US-B1- 6 475 576

## Beschreibung

Die Erfindung betrifft ein Fahrzeuginnenverkleidungsteil das beispielsweise als eine Instrumententafel mit einer Formhaut, einer Zwischenschicht, einem Träger und mindestens einem in der Zwischenschicht angeordneten Verstärkungselement ausgebildet sein kann, sowie ein Verfahren zum Herstellen eines solchen Fahrzeuginnenverkleidungsteils.

Nach dem Stand der Technik ist es bekannt, zur Herstellung eines Fahrzeuginnenverkleidungsteils wie beispielsweise einer Instrumententafel zunächst eine Formhaut durch Aufsprühen auf eine Form oder durch Rotationssintern herzustellen. Anschließend werden Formhaut und ein ebenfalls vorher hergestellter Träger in ein Schäumwerkzeug eingelegt und hinterschäumt. Um Biegungen der Formhaut, beispielsweise an einzubringenden Öffnungen für Luftausströmer, positionsgenau zu definieren, ist es bekannt, an den Stellen der beabsichtigten Biegungen der Formhaut Verstärkungselemente mit im Schäumwerkzeug anzuordnen.

Hierbei ergibt sich jedoch das Problem, dass die Verstärkungselemente beim Hinterschäumen aufschwimmen können. Hierdurch verändert sich eine Position der Verstärkungselemente und somit der Biegungen der Formhaut. Schlimmstenfalls können die Verstärkungselemente in einen Bereich gelangen, in dem später eine Öffnung eingebracht werden soll. Dies kann dazu führen, dass Werkzeuge, welche zur Einbringung der Öffnungen verwendet werden, beschädigt werden. Wird die Öffnung beispielsweise ausgestanzt, kann ein in den Bereich der Öffnung verrutschtes Verstärkungselement zu einem Messerbruch bei der verwendeten Stanze führen.

Fahrzeuginnenverkleidungsteile mit in der Zwischenschicht angeordneten Verstärkungselementen sind beispielsweise aus den Druckschriften DE 60 2004 012 790 T2, DE 199 62 551 A1 und DE 30 16 199 A1 bekannt.

Die gattungsgemäße Druckschrift US 2001 0 030 070 A1 zeigt beispielweise eine Kombination aus einer mehrschichtigen Instrumententafel mit einer Hautschicht mit einer freiliegenden Oberfläche und einer Öffnung und einem ersten Zubehörteil, das in der Öffnung angebracht ist. Das erste Zubehörteil hat eine freiliegende Fläche, die im Wesentlichen bündig mit der freiliegenden Oberfläche der Hautschicht ist. Das erste Zubehörteil ist in der Öffnung angebracht ist und operativ mit der mehrschichtigen Instrumententafel verbunden. Aufgabe der Erfindung ist es daher, ein ungewolltes Verändern der Position des Verstärkungselements beim Hinterschäumen zuverlässig zu verhindern. Diese Aufgabe wird durch ein Fahrzeuginnenverkleidungsteil mit den Merkmalen des Anspruchs 1 sowie ein Verfahren mit den Merkmalen des Anspruchs 10 gelöst. Vorteilhafte Weiterbildungen und Ausgestaltungen ergeben sich aus den Merkmalen der Unteränsprüche.

Dadurch, dass an der Formhaut Mittel zur Fixierung des Verstärkungselements angeordnet sind oder die Formhaut Mittel zur Fixierung des Verstärkungselements umfasst, wird ein Verrutschen des Verstärkungselements beim Hinterschäumen zuverlässig verhindert, so dass die Positionen der Biegungen der Formhaut zuverlässig definiert sind.

Die Mittel zur Fixierung sind als mindestens eine Erhöhung und besonders vorzugsweise als mindestens eine rippenförmige Erhöhung ausgebildet. Derartige Erhöhungen lassen sich einfach auf eine Formhaut aufbringen oder besonders bevorzugt mit der Formhaut als ein Bestandteil derselben herstellen.

In einer weiteren vorteilhaften Ausführungsform sind die Mittel zur Fixierung auf einer Sichtseite der Formhaut angeordnet. Hierdurch können die Mittel zur Fixierung bereits in einer Form zur Herstellung der Formhaut berücksichtigt sein, derart, dass ein Negativ der Mittel zur Fixierung als Vertiefung in die Formoberfläche eingebracht ist. Ebenso können die Mittel zur Fixierung auf einer Rückseite der Formhaut angeordnet sein. Auch derart angeordnete Mittel zur Fixierung können leicht hergestellt werden, beispielsweise dadurch, dass in den Bereichen, in denen die Mittel zur Fixierung erwünscht sind, zusätzlicher Kunststoff beim Herstellen der Formhaut aufgebracht wird. Somit ist eine einteilige Ausbildung der Mittel zur Fixierung mit der Formhaut möglich. Die Mittel zur Fixierung sind dabei aus demselben Material wie die restliche Formhaut ausgebildet. Das Aufbringen des zusätzlichen Kunststoffs kann beispielsweise derart geschehen, dass zusätzlicher Kunststoff aufgesprüht wird, oder derart, dass die Bereiche, in denen Mittel zur Fixierung vorgesehen sein sollen, beim Rotationssintern verstärkt beheizt werden.

Die Mittel zur Fixierung zum indirekten Fixieren des Verstärkungselements sind derart ausgebildet und angeordnet, dass durch die Mittel zur Fixierung eine Verformung der Formhaut ausgelöst wird, durch welche das Verstärkungselement fixiert wird.

In einer weiteren besonders bevorzugten Ausführungsform können die Mittel zur Fixierung zum formschlüssigen Halten des Verstärkungselements ausgebildet sein. Ein besonders einfaches Herstellen eines Verstärkungselements ist möglich, wenn dieses als ein Verstärkungsdraht ausgebildet ist.

In einer weiteren besonders bevorzugten Ausführungsform weist die Instrumententafel bzw. das Fahrzeuginnenverkleidungsteil mindestens eine Öffnung auf. Bevorzugt kann die Öffnung einen Luftausströmer aufnehmen. Selbstverständlich kann die Öffnung auch zum Aufnehmen anderer Komponenten, beispielsweise eines Radios, Navigationsgerätes, Handschuhkastens, Lichtdrehschalters, Bedienelements
einer Scheinwerfer-Höhenverstellung oder dergleichen, ausgebildet sein. Weist die Instrumententafel bzw. das Fahrzeuginnenverkleidungsteil eine Öffnung auf, kann das Verstärkungselement bevorzugt die Öffnung umlaufend ausgebildet sein. Hierdurch kann eine Biegung der Formhaut um die Öffnung herum realisiert werden.

Besonders bevorzugt kann das Verstärkungselement als ein die Öffnung umlaufender (Draht-)Ring ausgebildet sein. Insbesondere wenn das Verstärkungselement als die Öffnung umlaufendes Verstärkungselement ausgebildet ist, ist es vorteilhaft, wenn die Mittel zur Fixierung ebenfalls die Öffnung umlaufend angeordnet und ausgebildet sind.

Die Zwischenschicht kann besonders bevorzugt als geschäumte Zwischenschicht ausgebildet sein. Eine solche ist sehr einfach herzustellen.

Weiterhin betrifft die Erfindung ein Verfahren zur Herstellung einer Instrumententafel bzw. eines Fahrzeuginnenverkleidungsteils. Bei einem solchen wird zunächst eine Form bereitgestellt, welche eine Formoberfläche aufweist, in der eine zusätzliche Vertiefung, welche zur Ausbildung der Mittel zur Fixierung dienen kann, angeordnet ist. Anschließend wird die Formhaut durch Aufsprühen auf die Form oder durch Rotationssintern unter Verwendung der Form hergestellt, derart, dass in die zusätzliche Vertiefung Kunststoff eindringt, welcher später eine auf die Formhaut aufgebrachte Erhöhung ausbildet.

Die so hergestellte Formhaut wird anschließend zusammen mit einem ebenfalls vorher hergestellten Träger sowie dem Verstärkungselement in ein Schäumwerkzeug eingelegt, wobei durch die auf die Formhaut aufgebrachte Erhöhung eine lokale zusätzliche Verformung der Formhaut hervorgerufen wird, durch die das Verstärkungselement fixiert wird. Anschließend wird die Formhaut hinterschäumt, derart, dass das Verstärkungselement in eine Schaumschicht eingebettet wird.

Vorteilhafte Ausgestaltungen der Erfindung werden nachfolgend anhand der Figuren erläutert. Es zeigen:
- Fig. 1a: eine Form zum Herstellen einer Formhaut,
- Fig. 1b: ein Detail der in Fig. 1a dargestellten Form,
- Fig. 1c: einen Bereich einer mit der Form aus den Fign. 1a und 1b hergestellten Formhaut,
- Fig. 1d: eine Anordnung der Formhaut, eines Trägers sowie eines Verstärkungselements in einem Schäumwerkzeug,
- Fig. 1e: eine Instrumententafel vor dem Einbringen einer Öffnung,
- Fig. 1f: eine Instrumententafel nach dem Einbringen einer Öffnung und nach einem Einbau eines Luftausströmers,
- Fig. 2: Ausschnitt einer Instrumententafel gemäß einer zweiten Ausführungsform der Erfindung
- Fig. 2a: ein Detail der zweiten Ausführungsform einer vorteilhaften Instrumententafel und
- Fig. 2b: ein weiteres Detail der zweiten Ausführungsform einer vorteilhaften Instrumententafel.

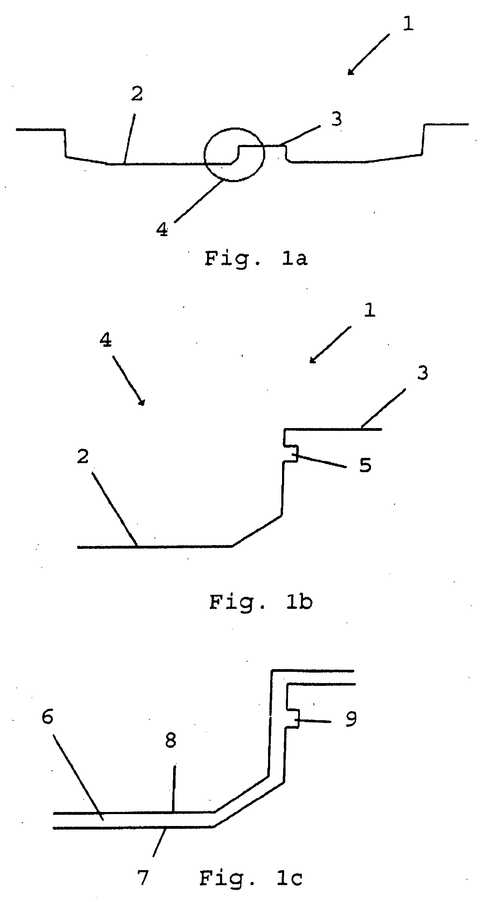

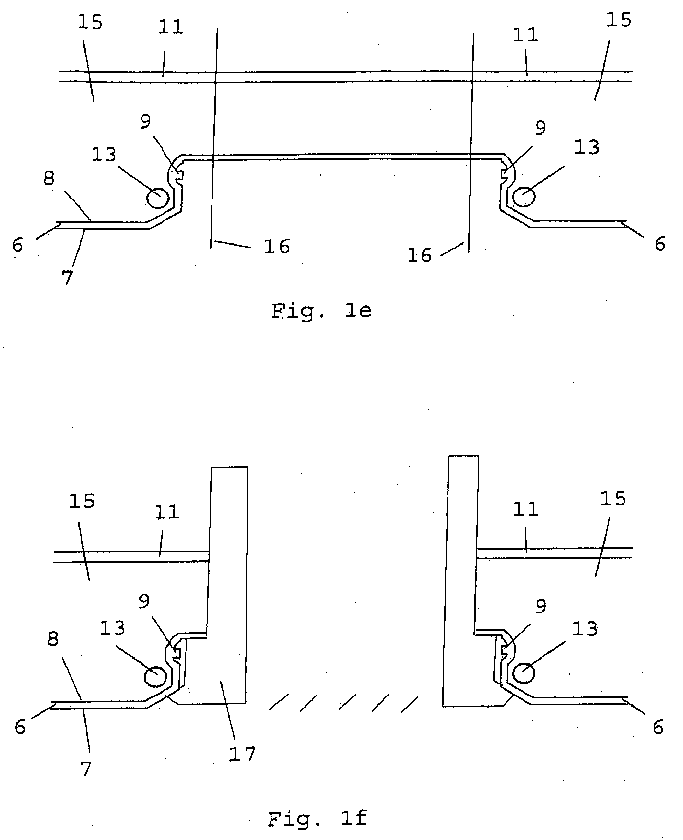

In Fig. 1a ist eine Form 1 zum Herstellen einer Formhaut für eine Instrumententafel oder für ein anderes Fahrzeuginnenverkleidungsteil dargestellt. Die Form 1 weist eine zur Formung einer Sichtseite der Formhaut ausgebildete Innenseite 2 auf. Die Form weist des Weiteren einen erhöhten Bereich 3 auf, mit dem eine Biegung der Formhaut im Bereich einer später einzubringenden Öffnung realisiert wird.

Ein Detail 4 der Form 1 ist in Fig. 1b genauer dargestellt. Wie in Fig. 1b zu erkennen ist, weist die Form 1 eine zusätzliche Vertiefung 5 auf, die in einer einen Übergang zum erhöhten Bereich 3 bildenden Flanke angeordnet ist.

In Fig. 1c ist ein Ausschnitt einer Formhaut 6 gezeigt, wobei der Ausschnitt einem durch den im Detail 4 dargestellten Bereich der Form hergestellten Abschnitt der Formhaut 6 entspricht. Die Formhaut 6 weist eine Sichtseite 7 sowie eine Rückseite 8 auf. Die Sichtseite 7 ist dabei die mit der Innenseite 2 der Form 1 geformte Seite der Formhaut 6. Die Formhaut weist eine Erhöhung 9 auf, die im vorliegenden Ausführungsbeispiel rippenförmig ausgebildet und auf der Sichtseite 7 der Formhaut 6 angeordnet ist.

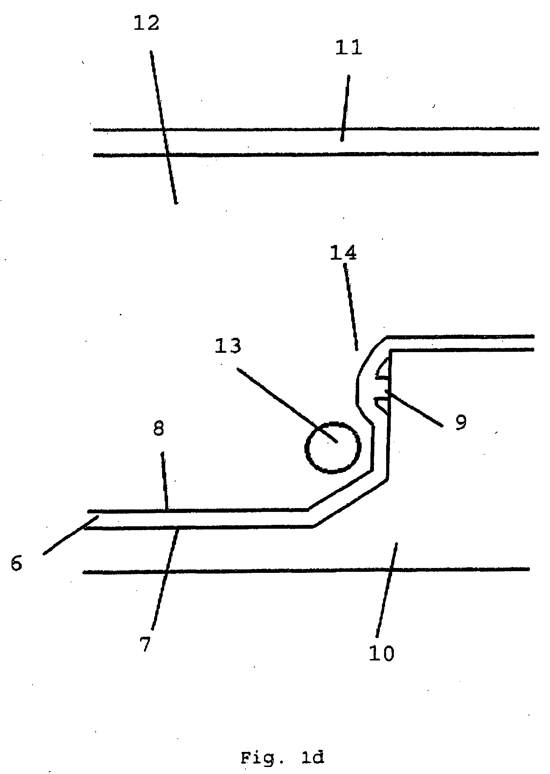

In Fig. 1d ist die Formhaut 6 auf einer Unterseite 10 eines Schäumwerkzeugs angeordnet. Im Schäumwerkzeug oben befindet sich ein Träger 11, wobei zwischen Träger 11 und Formhaut 6 ein Zwischenraum eingeschlossen ist. Innerhalb des Zwischenraums 12 ist ein Verstärkungselement 13, welches im vorliegenden Ausführungsbeispiel als Drahtring ausgebildet ist, angeordnet. Die auf der Sichtseite 7 der Formhaut 6 angeordnete Erhöhung 9 drückt sich von der Unterseite 10 des Schäumwerkzeugs ab. Hierdurch bildet die Formhaut 6 eine in den Zwischenraum 12 gerichtete Erhöhung 14 aus. Die in den Zwischenraum 12 gerichtete Erhöhung 14 verhindert, dass das Verstärkungselement 13 beim Hinterschäumen nach oben aufschwimmen kann, da es in diese Richtung einen Formschluss herstellt.

In Fig. le ist ein Bereich einer Instrumententafel vor dem Einbringen einer Öffnung gezeigt. Der dargestellte Bereich beinhaltet den Abschnitt der Formhaut 6, der durch den erhöhten Bereich 3 der Form 1 geformt wurde. Zwischen Träger 11 und Formhaut 6 ist eine Schaumschicht 15 angeordnet. Anschließend wird der Bereich der Instrumententafel zwischen den beiden Linien 16 ausgestanzt. Wie in Fig. 1f zu erkennen, wird in die dadurch gebildete Öffnung ein Luftausströmer 17 eingesetzt. Es sei darauf hingewiesen, dass in gleicher Weise auch in andere Fahrzeuginnenverkleidungsteile Öffnungen eingearbeitet und Einsätze'wie Luftausströmer 17 eingebaut werden können.

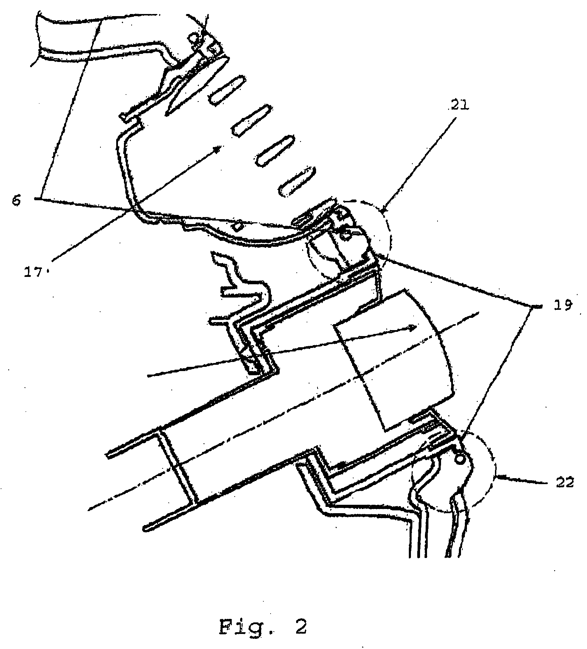

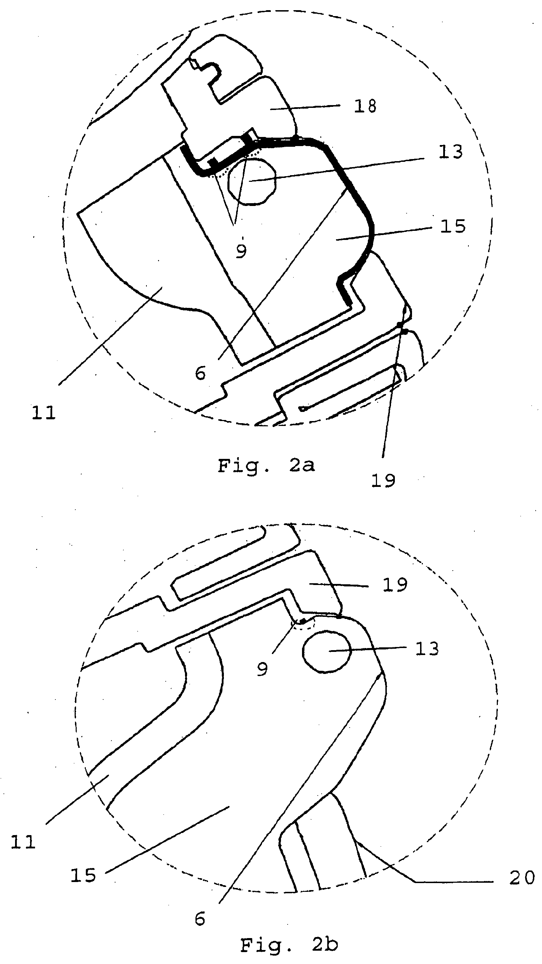

In der Figur 2 ist ein Ausschnitt eines weiteren Ausführungsbeispiels eines bevorzugten Fahrzeuginnenverkleidungsteils (beispielsweise einer Instrumententafel) dargestellt, wobei die Figuren 2a und 2b die mit den Nummern 21 bzw. 22 bezeichneten Details zeigen. Auch in diesem Ausführungsbeispiel umfasst die Instrumententafel eine Formhaut 6, einen Träger 11, eine geschäumte Zwischenschicht 15 sowie ein Verstärkungselement 13. Auch hier wird das Verstärkungselement 13 durch als Erhöhungen 9 ausgebildete Fixierungselemente fixiert.

Angrenzend an die Formhaut 6 ist eine Blende 18 eines Luftausströmers zu erkennen. Außerdem ist eine Blende 19 eines Lichtdrehschalters dargestellt. In dem in Figur 2b dargestellten Detail ist außerdem eine weitere Blende 20 zu erkennen. Auch wenn in den dargestellten Ausführungsbeispielen die Mittel zur Fixierung 9 als auf die Formhaut 6 aufgebrachte Erhöhungen ausgebildet sind, sind prinzipiell auch andere Ausbildungen möglich. Beispielsweise könnten auch auf der Rückseite 8 der Formhaut 6 Erhöhungen aufgebracht sein. Ebenso wäre es möglich, dass die Erhöhungen 9 nicht als Bestandteil der Formhaut ausgebildet sind, sondern nachträglich auf diese aufgeklebt werden.

## Patentansprüche

1. Fahrzeuginnenverkleidungsteil, insbesondere Instrumententafel, mit einer Formhaut (6), einer Zwischenschicht (15), einem Träger (11), sowie mindestens einem in der Zwischenschicht (15) angeordneten Verstärkungselement (13), **dadurch gekennzeichnet, dass** an der Formhaut (6) Mittel zur Fixierung (9) des Verstärkungselements (13) angeordnet sind oder die Formhaut Mittel zur Fixierung (9) des Verstärkungselements (13) umfasst, wobei die Mittel zur Fixierung als mindestens eine Erhöhung aus dem selben Material wie die restliche Formhaut ausgebildet sind und wobei die Mittel zur Fixierung (9) zum indirekten Fixieren des Verstärkungselements (13) durch Erzeugen einer Verformung (14) der Formhaut (6) ausgebildet und angeordnet sind.

2. Fahrzeuginnenverkleidungsteil nach Anspruch 1, **dadurch gekennzeichnet, dass** die Mittel zur Fixierung (9) als mindestens eine rippenförmige Erhöhung ausgebildet sind.

3. Fahrzeuginnenverkleidungsteil nach Anspruch 1 oder 2 **dadurch gekennzeichnet, dass** die Mittel zur Fixierung (9) auf einer Sichtseite (7) der Formhaut (6) oder auf einer Rückseite (8) der Formhaut (6) angeordnet sind.

4. Fahrzeuginnenverkleidungsteil nach einem der Ansprüche 1 bis 3, **dadurch gekennzeichnet, dass** die Mittel zur Fixierung (9) einteilig mit der Formhaut (6) ausgebildet sind.

5. Fahrzeuginnenverkleidungsteil nach einem der vorangehenden Ansprüche, **dadurch gekennzeichnet, dass** die Mittel zur Fixierung (9) zum formschlüssigen Halten des Verstärkungselements ausgebildet sind.

6. Fahrzeuginnenverkleidungsteil nach einem der vorangehenden Ansprüche, **dadurch gekennzeichnet, dass** das Verstärkungselement (13) als ein Verstärkungsdraht ausgebildet ist.

7. Fahrzeuginnenverkleidungsteil nach einem der vorangehenden Ansprüche, **gekennzeichnet durch** eine Öffnung in der bevorzugt ein Luftausströmer angeordnet ist.

8. Fahrzeuginnenverkleidungsteil nach Anspruch 8, **dadurch gekennzeichnet, dass** das Verstärkungselement (13) als die Öffnung umlaufendes Verstärkungselement und vorzugsweise als die Öffnung umlaufender Ring ausgebildet ist wobei vorzugsweise das Mittel zur Fixierung (9) als die Öffnung umlaufendes Mittel zur Fixierung (9) ausgebildet ist.

9. Fahrzeuginnenverkleidungsteil nach einem der vorangehenden Ansprüche, **dadurch gekennzeichnet, dass** die Zwischenschicht (15) als geschäumte Zwischenschicht ausgebildet ist.

10. Verfahren zum Herstellen eines Fahrzeuginnenverkleidungsteils mit den Schritten:
- Bereitstellen einer Form (1), welche eine Formoberfläche (2) mit einer zusätzlichen Vertiefung (5) aufweist,
- Herstellen einer Formhaut (6) durch Sprühen öder Rotationssintern unter Verwendung der Form (1), derart, dass in die zusätzliche Vertiefung (5) eindringender Kunststoff eine auf die Formhaut aufgebrachte Erhöhung (9) aus dem selben Material wie die restliche Formhaut ausbildet,
- Einlegen der Formhaut (6) sowie eines Verstärkungselementes (13) in eine Schäumform (10), wobei durch die Erhöhung (9) eine lokale zusätzliche Verformung (14) der Formhaut hervorgerufen wird, durch welche das Verstärkungselement (13) fixiert wird.
- Hinterschäumen der Formhaut (6) derart, dass das Verstärkungselement in eine Schaumschicht (15) eingebettet wird.

## Claims

1. A vehicle interior trim part, in particular a dashboard, having a molded skin (6), an intermediate layer (15), a carrier (11) and at least one reinforcement element (13) arranged in the intermediate layer (15), **characterized in that** means for fixing (9) the reinforcement element (13) are arranged at the molded skin (6) or the molded skin includes means for fixing (9) the reinforcement element (13), wherein the means for fixing are formed as at least one elevated portion from the same material as the remaining molded skin and wherein the means for fixing (9) are formed and designed for the indirect fixing of the reinforcement element (13) by generating a deformation (14) of the molded skin (6).

2. A vehicle interior trim part in accordance with claim 1, **characterized in that** the means for fixing (9) are formed as at least one rib-shaped elevated portion.

3. A vehicle interior trim part in accordance with claim 1 or claim 2, **characterized in that** the means for fixing (9) are arranged on a visible side (7) of the molded skin (6) or on a rear side (8) of the molded skin (6).

4. A vehicle interior trim part in accordance with one of the claims 1 to 3, **characterized in that** the means for fixing (9) are formed in one part with the molded skin (6).

5. A vehicle interior trim part in accordance with one of the preceding claims, **characterized in that** the means for fixing (9) are formed for the shape-matched holding of the reinforcement element.

6. A vehicle interior trim part in accordance with one of the preceding claims, **characterized in that** the reinforcement element (13) is formed as a reinforcement wire.

7. A vehicle interior trim part in accordance with one of the preceding claims, **characterized by** an opening in which an air discharge installation is preferably arranged.

8. A vehicle interior trim part in accordance with claim 8, **characterized in that** the reinforcement element (13) is formed as a reinforcement element running around the opening and preferably as a ring running around the opening, with the means for fixing (9) preferably being formed as means for fixing (9) running around the opening.

9. A vehicle interior trim part in accordance with one of the preceding claims, **characterized in that** the intermediate layer (15) is formed as a foamed intermediate layer.

10. A method of manufacturing a vehicle interior trim part comprising the steps:
- providing a mold (1) which has a mold surface (2) having an additional recess (5);
- manufacturing a molded skin (6) by spraying or rotational sintering using the mold (1) such that plastic penetrating into the additional recess (5) forms an elevated portion (9) from the same material as the remaining molded skin applied to the molded skin;
- inserting the molded skin (6) and a reinforcement element (13) into a foaming mold (10), with a local additional deformation (14) of the molded skin being caused by the elevated portion (9) by which deformation the reinforcement element (13) is fixed; and
- back foaming the molded skin (6) such that the reinforcement element is embedded into a foam layer (15).

## Revendications

1. Pièce de carénage d'intérieur de véhicule, plus particulièrement tableau de bord, avec une enveloppe de forme (6), une couche intermédiaire (15), un support (11), ainsi qu'au moins un élément de renfort (13) disposé dans la couche intermédiaire (15), **caractérisée en ce que** sur l'enveloppe de forme (6) sont disposés des moyens pour la fixation (9) de l'élément de renfort (13) ou l'enveloppe de forme comprend des moyens de fixation (9) de l'élément de renfort (13), les moyens pour la fixation étant conçus sous la forme d'au moins une saillie constituée du même matériau que le reste de l'enveloppe de forme et les moyens de fixation (9) étant conçus et disposés pour la fixation indirecte de l'élément de renfort (13) par la création d'une déformation (14) de l'enveloppe de forme (6).

2. Pièce de carénage d'intérieur de véhicule selon la revendication 1, **caractérisée en ce que** les moyens de fixation (9) sont conçus comme au moins une saillie en forme de nervure.

3. Pièce de carénage d'intérieur de véhicule selon la revendication 1 ou 2, **caractérisée en ce que** les moyens de fixation (9) sont disposés sur un côté visible (7) de l'enveloppe de forme (6) ou sur un côté arrière (8) de l'enveloppe de forme (6).

4. Pièce de carénage d'intérieur de véhicule selon l'une des revendications 1 à 3, **caractérisée en ce que** les moyens de fixation (9) sont conçus d'une seule pièce avec l'enveloppe de forme (6).

5. Pièce de carénage d'intérieur de véhicule selon l'une des revendications précédentes, **caractérisée en ce que** les moyens de fixation (9) sont conçus pour le maintien avec une complémentarité de forme de l'élément de renfort.

6. Pièce de carénage d'intérieur de véhicule selon l'une des revendications précédentes, **caractérisée en ce que** l'élément de renfort (13) est conçu comme un fil de renfort.

7. Pièce de carénage d'intérieur de véhicule selon l'une des revendications précédentes, **caractérisée par** une ouverture dans laquelle se trouve, de préférence, une buse d'aération.

8. Pièce de carénage d'intérieur de véhicule selon la revendication 8, **caractérisée en ce que** l'élément de renfort (13) est conçu comme un élément de renfort entourant l'ouverture et de préférence comme une bague entourant l'ouverture et, de préférence, le moyen de fixation (9) est conçu comme un moyen de fixation (9) entourant l'ouverture.

9. Pièce de carénage d'intérieur de véhicule selon l'une des revendications précédentes, **caractérisée en ce que** la couche intermédiaire (15) est conçue comme une couche intermédiaire en mousse.

10. Procédé de fabrication d'une pièce de carénage intérieur de véhicule, comprenant les étapes suivantes :
- création d'une forme (1), qui comprend une surface de forme (2) avec un creux supplémentaire (5),
- réalisation d'une enveloppe de forme (6) par pulvérisation ou rotomoulage à l'aide du moule (1) de telle sorte que la matière plastique pénétrant dans le creux supplémentaire (5) forme une saillie (9) posée sur l'enveloppe de forme constituée du même matériau que le reste de l'enveloppe de forme,
- insertion de l'enveloppe de forme (6) ainsi que d'un élément de renfort (13) dans un moule par moussage (10), la saillie (9) provoquant une déformation supplémentaire locale (14) de l'enveloppe de forme, grâce à laquelle l'élément de renfort (13) est fixé,
- moussage arrière de l'enveloppe de forme (6) de façon à ce que l'élément de renfort soit intégré dans une couche de mousse (15).
